# EUROPÄISCHE PATENTSCHRIFT

(11) **EP 1 495 965 B1**
(45) Veröffentlichungstag und Bekanntmachung des Hinweises auf die Patenterteilung: **06.09.2006**
(21) Anmeldenummer: 04015433.8
(22) Anmeldetag: 01.07.2004
(51) Int. Cl.: B65B 9/20, B65B 9/22, B65B 59/04

(54) **Vertikale Schlauchbeutelmaschine**
Vertical tubular bag making machine
Machine verticale de fabrication de sacs tubulaires

(30) Priorität: 09.07.2003 DE 10330851
(43) Veröffentlichungstag der Anmeldung: 12.01.2005
(73) Patentinhaber: ROVEMA VERPACKUNGSMASCHINEN GMBH, 35463 Fernwald (DE)
(72) Erfinder: Braun, Harald, 35305 Grünberg (DE); Baur, Walter, Dr., 63584 Gründau (DE)

(56) Entgegenhaltungen:
- EP-A- 0 818 389
- DE-A- 3 841 056
- PATENT ABSTRACTS OF JAPAN Bd. 015, Nr. 257 (M-1130), 28. Juni 1991 (1991-06-28) -& JP 03 085208 A (KAWASHIMA PACKAGING MACH LTD), 10. April 1991 (1991-04-10)

## Beschreibung

Die Erfindung betrifft eine vertikale Schlauchbeutelmaschine gemäß dem Oberbegriff des Anspruchs 1. Eine derartige Maschine ist z.B. aus der EP-A-818 389 bekannt.

Vertikale Schlauchbeutelmaschinen dienen zum Erzeugen und Befüllen von Schlauchbeuteln und sind hinlänglich bekannt. An diesen Maschinen wird eine von einer Vorratsrolle abgewickelte Folienbahn mittels einer Formschulter zu einem vertikal ausgerichteten Folienschlauch umgeformt. Der Folienschlauch umgibt ein Füllrohr zum Befüllen des Folienschlauches. Das untere Schlauchende wird befüllt, verschweißt und vom restlichen Folienschlauch abgetrennt, um derart befüllte Schlauchbeutel zu erzeugen.

Es werden, je nach zu erreichenden Beuteltyp, unterschiedliche Formschultern und Füllrohre eingesetzt. Im allgemeinen besteht eine Formschulter aus einem einteiligen Schultermantel, über den die ebene Folienbahn läuft, um zu einer Umlenkkante zu gelangen. An der Umlenkkante wird die Folienbahn sodann umgeformt, um sich nach Passieren der Umlenkkante als vertikal ausgerichteter Folienschlauch weiterzubewegen. Dabei durchläuft der Folienschlauch eine ringförmige Passage, welche außen von einem Schulterstutzen und von innen her von dem Füllrohr begrenzt wird.

Beim Abpacken eines fließfähigen, z. B. pulverförmigen Produktes ist es üblich, eine Schneckendosierung zum volumetrischen Bestimmen der abzupackenden Produktmasse einzusetzen. Die Schneckendosierung besteht aus einer Dosierschnecke in einem Schneckenrohr. Ein Antrieb dreht die Dosierschnecke im Schneckenrohr. Nach jeweils einem vorgegebenen Drehwinkel entspricht das von der Schneckendosierung abgegebene Produktvolumen der pro Schlauchbeutel vorgegebenen Befüllmasse. Das Schneckenrohr befindet sich im Füllrohr.

Die bekannte Schlauchbeutelmaschine hat den Nachteil, dass es relativ umständlich ist; eine Schneckendosierung in ein Füllrohr zu setzen bzw. aus diesem zu entnehmen. Dieses relativ lange und schwere Aggregat muss beim Einsetzen in das Füllrohr zunächst nach oben gehoben und dann wieder nach unten gelassen werden, um derart in das Füllrohr zu gelangen. Für diese Montage der bis zu 1,60 m langen Schneckendosierung ist oberhalb des Füllrohres ein relativ hoher Montageraum notwendig. Zudem ist diese Arbeit von einer Person allein nicht zu leisten.

Der Erfindung liegt die Aufgabe zu Grunde, eine vertikale Schlauchbeutelmaschine gemäß dem Oberbegriff des Anspruchs 1 derart weiterzubilden, dass die Montage einer Schneckendosierung einfacher ist, und dass oberhalb des Füllrohres kein hoher Montageraum mehr nötig ist.

Gelöst ist die Aufgabe gemäß dem kennzeichnenden Teil des Anspruchs 1. Die Montagefreundlichkeit der Schlauchbeutelmaschine ist verbessert, da das Füllrohr aus zwei mit ihrem Inneren gegeneinander ausgerichteten Rinnen gebildet ist, wobei eine Rinne lösbar mit der anderen Rinne verbunden ist. Dies hat den Vorteil, dass man nach einem Entfernen der Formschulter das Füllrohr öffnen kann, indem man eine Rinne abnimmt. Danach kann eine im Füllrohr vorgesehene Dosierschnecke, die bei Dosierungen von Pulver oder Granulat sehr oft eingesetzt wird, in einfacher Weise seitlich aus dem Füllrohr entnommen werden. Ein umständliches, durch obere Bauteile im allgemeinen behindertes, nach oben Herausziehen einer relativ langen und schweren Dosierschnecke wird somit vermieden. Das seitliche Herausnehmen der Dosierschnecke hat zudem den Vorteil, dass der Raum oberhalb der Dosierschnecke für andere sinnvolle Aggregate genutzt werden kann, d. h. nicht mehr ausgespart werden muss. Oder dieser Raum kann gänzlich entfallen, was zu einer kompakteren Bauweise und damit zu einem geringeren Platzbedarf für die vertikale Schlauchbeutelmaschine führt. Im geöffneten Zustand des Füllrohres ist eine einfache Reinigung möglich.

Weitere, vorteilhafte Ausgestaltungen der vorgeschlagenen Schlauchbeutelmaschine sind in den Ansprüchen 2 bis 8 beschrieben.

Das Herausheben einer Förderschnecke aus dem Füllrohr erfolgt am einfachsten in Richtung zur Längssiegeleinrichtung hin, da dort maschinenbedingt ohnehin ein entsprechender Freiraum vorkommt. Dies ist möglich, wenn analog Anspruch 2 die lösbare Rinne im Bereich der aneinanderliegenden Ränder des Folienschlauches vorgesehen ist.

Prinzipiell sind viele Techniken denkbar, um die Rinnen leicht lösbar und damit bedienungsfreundlich miteinander zu verbinden. So können die Rinnen in technisch einfacher Weise über eine Steckverbindung miteinander verbunden werden (Anspruch 4). Oder eine Rinne ist über ein Drehgelenk mit der anderen Rinnen verbunden, und es ist eine Feststelleinrichtung zum Arretieren der wegschwenkbaren Rinne in einer an der anderen Rinne anliegenden Position vorgesehen (Anspruch 3). Nach einem Lösen der Feststelleinrichtung kann derart eine Rinne weggeschwenkt werden, um eine Schneckendosierung (Anspruch 8) zu entnehmen.

Eine seitliche Entnahme einer Schneckendosierung wird weiter vereinfacht, wenn analog Anspruch 5 der Schultermantel aus zwei separaten Mantelteilen, und der Schulterstutzen aus zwei separaten Stutzenteilen gebildet wird, jeweils ein Mantelteil und ein daran angrenzendes Stutzenteil eine Baueinheit beschreiben, die beiden Baueinheiten die Formschulter bilden, und eine Baueinheit von der anderen Baueinheit abnehmbar ist, um das Füllrohr bzw. eine Rinne quer zur Transportrichtung, also seitlich aus der Formschulter entnehmen zu können.

Derart muss die Formschulter nicht entfernt werden, um eine Rinne zu lösen. Die Formschulter wird lediglich geöffnet, ebenso das Füllrohr, um eine Schneckendosierung zu entnehmen.

Ist an der Schlauchbeutelmaschine eine hintere Baueinheit vorgesehen, welche zur einlaufenden Folienbahn hin positioniert ist, und eine vordere Baueinheit im Bereich der aneinanderliegenden Ränder des Folienschlauches (Anspruch 6), so ist zum einen ein ortsgenauer Lauf der Folienbahn zur Umlenkkanten und zum anderen ein ortsgenauer Lauf der Ränder der Folienbahn hin zu einer Längssiegeleinrichtung erreicht.

Ein einfaches Öffnen der Formschulter kann erfolgen, wenn eine Baueinheit über eine Steckverbindung mit der anderen Baueinheit verbunden ist. Dann wird lediglich eine Baueinheit von der anderen abgezogen, um das Füllrohr öffnen zu können. Oder eine Baueinheit ist über ein Drehgelenk und eine Feststelleinrichtung mit der anderen Baueinheit verbunden (Anspruch 7). Dann wird die schwenkbare Baueinheit einfach weggeschwenkt, um eine Rinne, z. B. ebenfalls mittels wegschwenken, zu lösen.

Im folgenden wird die Erfindung an Hand von Ausführungsbeispiele darstellenden Figuren näher beschrieben. Es zeigt:

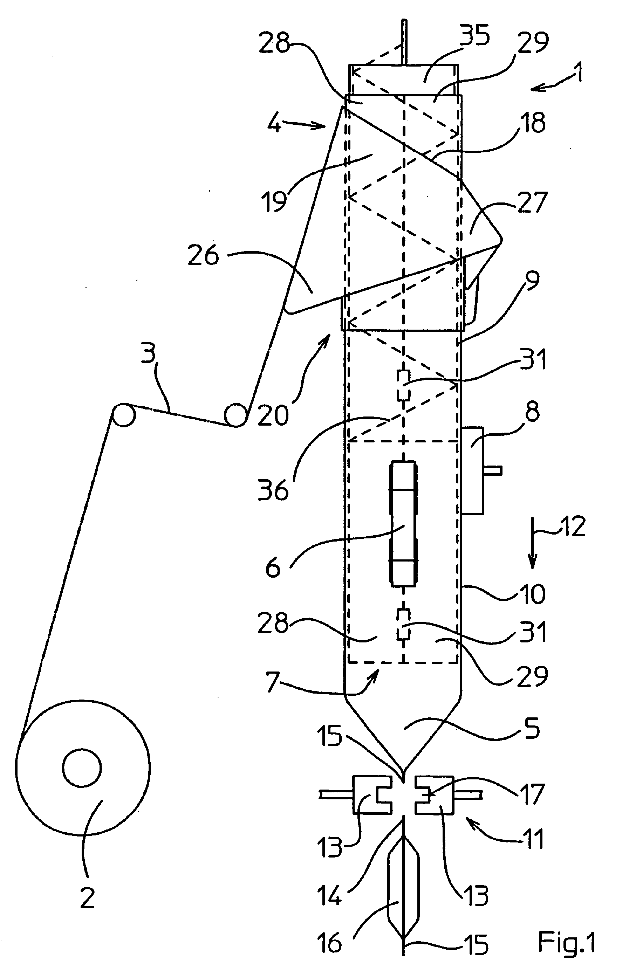

- Figur 1: in einer Seitenansicht eine vertikale Schlauchbeutelmaschine mit einer von einer Vorratsrolle abgewickelten Folienbahn, einer Formschulter zum Umformen der Folienbahn zu einem Folienschlauch, einer Längs- und einer Quersiegeleinrichtung zum Verschweißen des Folienschlauches, und einem Füllrohr zum Aufnehmen und Befüllen des Folienschlauches, einer Schneckendosierung innerhalb des Füllrohres, wobei die Formschulter aus zwei Bauteilen gebildet ist, welche jeweils einen Mantelteil und einen Stutzenteil umfassen und das Füllrohr aus zwei Rinnen besteht, wobei eine Rinne von der anderen Rinne lösbar ist:
- Figur 2: in einer Ansicht von oben die Formschulter mitsamt den beiden Rinnen und der Schneckendosierung der Figur 1, wobei sowohl die Formschulter als auch das Füllrohr geschlossen sind;
- Figur 3: in einer Ansicht von oben den Gegenstand der Figur 2, jedoch mit geöffneter Formschulter;
- Figur 4: in einer Ansicht von oben den Gegenstand der Figur 3, jedoch zusätzlich mit geöffnetem Füllrohr, um die aus einer Dosierschnecke und einem Schneckenrohr bestehende Schneckendosierung seitlich aus dem Füllrohr herausnehmen zu können;
- Figur 5: in einer Ansicht von oben ein zwei ein Füllrohr bildende Rinnen, welche über eine Steckverbindung miteinander verbunden sind, sowie
- Figur 6: in einer Ansicht von oben den Gegenstand der Figur 5, jedoch mit gelöster Steckverbindung.

Bei einer vertikalen Schlauchbeutelmaschine 1 wird eine Folienbahn 3 von einer Vorratsrolle 2 abgewickelt (Figur 1). Eine Formschulter 4 dient zum Umformen der Folienbahn 3 zu einem Folienschlauch 5. Ein Folienabzug 6 dient zum Weitertransportieren der Folienbahn 3 und des Folienschlauches 5. Ein vertikal ausgerichtetes Füllrohr 7 ist zum Aufnehmen und Befüllen des Folienschlauches 5 vorgesehen. Eine Längssiegeleinrichtung 8 dient zum Verschweißen der Ränder 9 der Folienbahn 3 und damit zum Erzeugen einer Längssiegelnaht 10 des Folienschlauches 5. Eine Quersiegeleinrichtung 11 mit gegeneinander beweglichen, den Folienschlauch 5 quer zu seiner Transportrichtung 12 verschweißenden Schweißbacken 13 ist zum Erzeugen von Kopfnähten 14 und Bodennähten 15 an Schlauchbeuteln 16 vorgesehen.

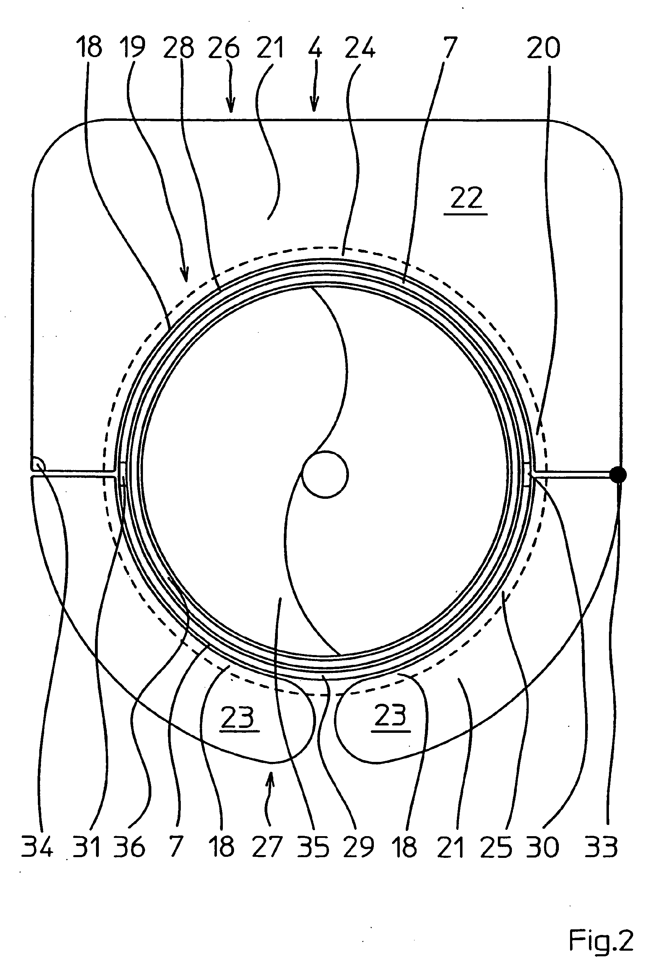

Eine Trenneinrichtung 17 dient zum Abtrennen der Schlauchbeutel 16 vom Folienschlauch 5. Die Formschulter 4 weist eine Umlenkkante 18 an einem oberen Rand 19 eines das Füllrohr 7 umgebenden Schulterstutzen 20 auf, ebenso einen an der gekrümmten Umlenkkante 18 ansetzenden, von der Umlenkkante 18 nach außen weg weisenden Schultermantel 21 (Figur 2). Der Schultermantel 21 wird aus zwei separaten Mantelteilen 22, 23 gebildet. Der Schulterstutzen 20 besteht aus zwei separaten Stutzenteilen 24, 25. Jeweils ein Mantelteil 22, 23 und ein daran angrenzendes Stutzenteil 24, 25 bilden eine Baueinheit 26, 27. Die beiden Baueinheiten 26, 27 beschreiben die Formschulter. Eine Baueinheit 27 ist von der anderen Baueinheit 26 abnehmbar, um an das Füllrohr 7 zu gelangen.

Es ist eine hintere Baueinheit 26 vorgesehen, welche zur einlaufenden Folienbahn 3 hin positioniert ist, und eine vordere Baueinheit 27 im Bereich der aneinanderliegenden Ränder 9 des Folienschlauches 5. Die vordere Baueinheit 27 ist über ein Drehgelenk 33 und eine Feststelleinrichtung 34 mit der hinteren Baueinheit 26 verbunden.

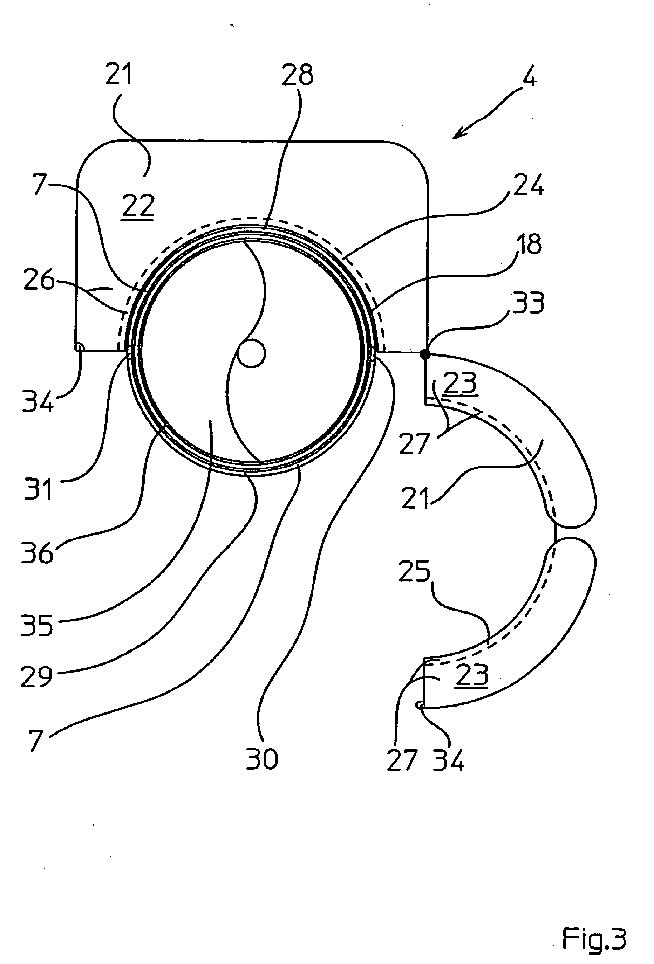

Um an das Füllrohr 7 zu gelangen, wird die Feststelleinrichtung 34, welche eine Einrasttechnik aufweist, gelöst, und die vordere Baueinheit 26 der Formschulter 4 wird um das Drehgelenk 33 geschwenkt, um die Formschulter 4 zu öffnen (Figur 3).

Das Füllrohr 7 besteht aus zwei mit ihrem Inneren gegeneinander ausgerichteten Rinnen 28, 29, wobei eine Rinne 29 lösbar mit der anderen Rinne 28 verbunden ist. Die lösbare Rinne 29 ist im Bereich der aneinanderliegenden Ränder 9 des Folienschlauches 5 vorgesehen. Die lösbare Rinne 29 ist über ein Drehgelenk 30 mit der anderen Rinne 28 verbunden. Eine Feststelleinrichtung 31 mit Einrasttechnik dient zum Arretieren der wegschwenkbaren Rinne 29 in einer an der anderen Rinne 28 anliegenden Position. Nach einem Wegschwenken der vorderen Rinne 29 an einen zwischen den Rinnen 28, 29 vorhandenen Schneckendosierer 37, der eine Dosierschnecke 35 mit einem die Dosierschnecke 35 umgebenden Schneckenrohr 36 aufweist, und der einer Produktdosierung dient.

Der Schneckendosierer 35 kann nun in einfacher Weise quer zur Transportrichtung 12 nach vorne aus dem Füllrohr 7 und aus der Formschulter 4 genommen werden.

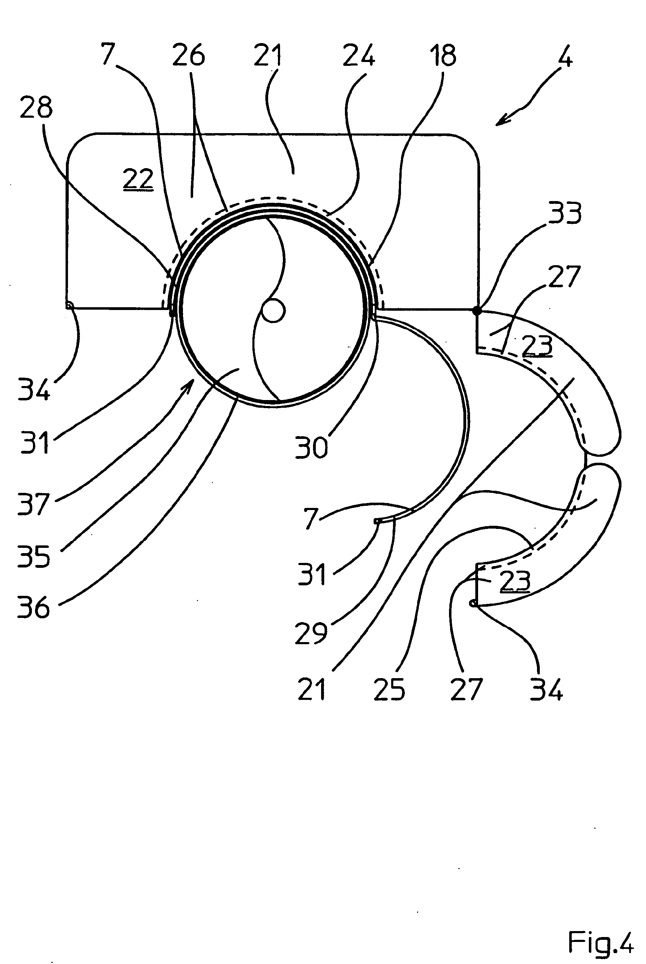

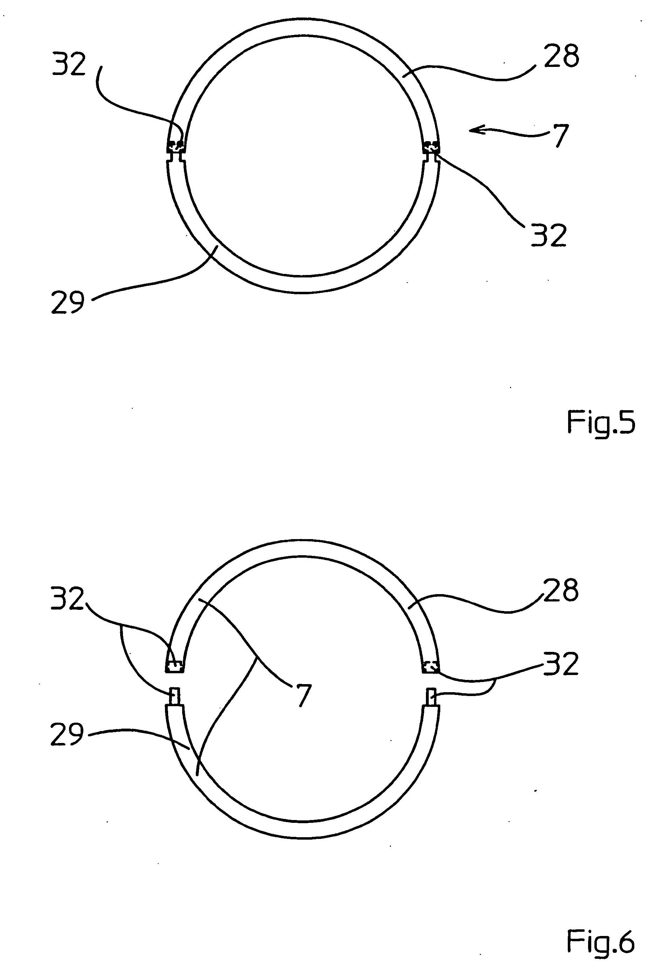

Beim Ausführungsbeispiel der Figuren 4 und 5 sind die beiden das Füllrohr 7 bildenden Rinnen 28, 29 über eine einfache, lösbare und wieder zusammenklickbare Steckverbindung miteinander verbunden. Nach einem Abnehmen der vorderen Rinne 29 von der hinteren Rinne 28 kann in gleicher Weise wie beim vorherigen Ausführungsbeispiel ein Schneckendosierer aus dem Füllrohr 7 entnommen bzw. in dieses eingesetzt werden. Zuvor muss eine einteilige Formschulter gänzlich abgenommen oder eine zweiteilige Formschulter geöffnet werden. Außer an einen Schneckendosierer zu gelangen, eignet sich eine abnehmbare Rinne 29 auch einem Öffnen des Füllrohres 7, um z. B. an eine Deionisierungseinrichtung, eine Schutzgaszuführung oder ein anderes, in der Verpackungsbranche bekanntes, im Füllrohr 7 angeordnetes Aggregat zu gelangen.
- 1: Schlauchbeutelmaschine
- 2: Vorratsrolle
- 3: Folienbahn
- 4: Formschulter
- 5: Folienschlauch
- 6: Folienabzug
- 7: Füllrohr
- 8: Längssiegeleinrichtung
- 9: Rand
- 10: Längssiegelnaht
- 11: Quersiegeleinrichtung
- 12: Transportrichtung
- 13: Schweißbacke
- 14: Kopfnaht
- 15: Bodennaht
- 16: Schlauchbeutel
- 17: Trenneinrichtung
- 18: Umlenkkante
- 19: oberer Rand
- 20: Schulterstutzen
- 21: Schultermantel
- 22, 23: Mantelteil
- 24, 25: Stutzenteil
- 26, 27: Baueinheit
- 28, 29: Rinne
- 30: Drehgelenk
- 31: Feststelleinrichtung
- 32: Steckverbindung
- 33: Drehgelenk
- 34: Feststelleinrichtung
- 35: Dosierschnecke
- 36: Schneckenrohr
- 37: Schneckendosierer

## Patentansprüche

1. Vertikale Schlauchbeutelmaschine (1) mit einer von einer Vorratsrolle (2) abgewickelten Folienbahn (3), einer Formschulter (4) zum Umformen der Folienbahn (3) zu einem Folienschlauch (5), einen Folienabzug (6) zum Weitertransportieren der Folienbahn (3) und des Folienschlauches (5), einem vertikal ausgerichteten Füllrohr (7) zum Aufnehmen und Befüllen des Folienschlauches (5), einer Längssiegeleinrichtung (8) zum Verschweißen der Ränder (9) der Folienbahn (3) und damit zum Erzeugen einer Längssiegelnaht (10) des Folienschlauches (5), einer Quersiegeleinrichtung (11) mit gegeneinander beweglichen, den Folienschlauch (5) quer zu seiner Transportrichtung (12) verschweißenden Schweißbacken (13) zum Erzeugen von Kopfnähten (14) und Bodennähten (15) an Schlauchbeuteln (16), und einer Trenneinrichtung (17) zum Abtrennen der Schlauchbeutel (16) vom Folienschlauch (5), **dadurch gekennzeichnet, dass** das Füllrohr (7) aus zwei mit ihrem Inneren gegeneinander ausgerichteten Rinnen (28, 29) gebildet ist, und dass eine Rinne (29) lösbar mit der anderen Rinne (28) verbunden ist.

2. Schlauchbeutelmaschine nach Anspruch 1, **dadurch gekennzeichnet, dass** die lösbare Rinne (29) im Bereich der aneinanderliegenden Ränder (9) des Folienschlauches (5) vorgesehen ist.

3. Schlauchbeutelmaschine nach Anspruch 1 oder Anspruch 2, **dadurch gekennzeichnet, dass** eine Rinne (29) über ein Drehgelenk (30) mit der anderen Rinne (28) verbunden ist, und dass eine Feststelleinrichtung (31) zum Arretieren der wegschwenkbaren Rinne (29) in einer an der anderen Rinne (28) anliegenden Position vorgesehen ist.

4. Schlauchbeutelmaschine nach Anspruch 1 oder Anspruch 2, **dadurch gekennzeichnet, dass** die Rinnen (28, 29) über eine Steckverbindung (32) miteinander verbunden sind.

5. Schlauchbeutelmaschine nach einem der Ansprüche 1 bis 4, **dadurch gekennzeichnet, dass** die Formschulter (4) eine Umlenkkante (18) an einem oberen Rand (19) eines das Füllrohr (7) umgebenden Schulterstutzens (20) und einen an der gekrümmten Umlenkkante (18) ansetzenden, von der Umlenkkante (18) nach außen weg weisenden Schultermantel (21) aufweist, dass der Schultermantel (21) aus zwei separaten Mantelteilen (22, 23) gebildet wird, dass der Schulterstutzen (20) aus zwei separaten Stutenteilen (24, 25) gebildet wird, dass jeweils ein Mantelteil (22, 23) und ein daran angrenzendes Stutzenteil (24, 25) eine Baueinheit (26, 27) bilden, dass die beiden Baueinheiten (26, 27) die Formschulter (4) beschreiben, und dass eine Baueinheit (27) von der anderen Baueinheit (26) abnehmbar ist, um das Füllrohr (7) oder eine Rinne (29) quer zur Transportrichtung (12) aus der Formschulter (4) entnehmen zu können.

6. Schlauchbeutelmaschine nach Anspruch 5, **dadurch gekennzeichnet, dass** eine hintere Baueinheit (26) vorgesehen ist, welche zur einlaufenden Folienbahn (3) hin positioniert ist, und dass eine vordere Baueinheit (27) im Bereich der aneinanderliegenden Ränder (9) des Folienschlauches (5) vorgesehen ist.

7. Schlauchbeutelmaschine nach Anspruch 5 oder Anspruch 6, **dadurch gekennzeichnet, dass** eine Baueinheit (27) über ein Drehgelenk (33) und eine Feststelleinrichtung (34) mit der anderen Baueinheit (26) verbunden ist.

8. Schlauchbeutelmaschine nach einem der Ansprüche 1 bis 7, **dadurch gekennzeichnet, dass** im Füllrohr (7) eine Dosierschnecke (35) mit einem die Dosierschnecke (35) umgebenden Schneckenrohr (36) vorgesehen sind.

## Claims

1. A vertical tubular-bag machine (1) comprising a foil web (3) which is unwound from a supply roll (2), a forming shoulder (4) for forming the foil web (3) into a foil tube (5), a foil draw-off device (6) for further transportation of the foil web (3) and the foil tube (5), a vertically arranged filler tube (7) for receiving and filling the foil tube (5), a longitudinal sealing means (8) for sealing the edges (9) of the foil web (3) and thus for producing a longitudinal sealed seam (10) of the foil tube (5), a transverse sealing means (11) with sealing jaws (13) which are movable towards one another and seal the foil tube (5) transversely to its transportation direction (12) for producing top seams (14) and bottom seams (15) on tubular bags (16), and a cutting means (17) for cutting the tubular bags (16) from the foil tube (5), **characterised in that** the filler tube (7) is formed from two troughs (28, 29), the interiors of which face one another, and **in that** one trough (29) is detachably connected to the other trough (28).

2. A tubular-bag machine according to claim 1, **characterised in that** the detachable trough (29) is provided in the region of the adjoining edges (9) of the foil tube (5).

3. A tubular-bag machine according to claim 1 or claim 2, **characterised in that** one trough (29) is connected to the other trough (28) by a hinge joint (30), and **in that** a locking means (31) is provided for securing the pivotable trough (29) in a position in which it rests against the other trough (28).

4. A tubular-bag machine according to claim 1 or claim 2, **characterised in that** the troughs (28, 29) are connected to one another by a plug-in connection (32).

5. A tubular-bag machine according to any one of claims 1 to 4, **characterised in that** the forming shoulder (4) has a deflection edge (18) on an upper edge (19) of a shoulder pipe (20) surrounding the filler tube (7) and has a shoulder casing (21) attached to the curved deflection edge (18) and extending outwards away from the deflection edge (18), **in that** the shoulder casing (21) is formed from two separate casing parts (22, 23), **in that** the shoulder pipe (20) is formed from two separate pipe parts (24, 25), **in that** a respective casing part (22, 23) and a respective adjacent pipe part (24, 25) form a structural unit (26, 27), **in that** the two structural units (26, 27) constitute the forming shoulder (4), and **in that** one structural unit (27) is removable from the other structural unit (26) in order to be able to withdraw the filler tube (7) or a trough (29) from the forming shoulder (4) transversely to the transportation direction (12).

6. A tubular-bag machine according to claim 5, **characterised in that** a rear structural unit (26) is provided which is positioned towards the incoming foil web (3), and **in that** a front structural unit (27) is provided in the region of the adjoining edges (9) of the foil tube (5).

7. A tubular-bag machine according to claim 5 or claim 6, **characterised in that** one structural unit (27) is connected to the other structural unit (26) by a hinge joint (33) and a locking means (34).

8. A tubular-bag machine according to any one of claims 1 to 7, **characterised in that** a metering screw (35) with a screw tube (36) surrounding the metering screw (35) is provided in the filler tube (7).

## Revendications

1. Ensacheuse verticale (1) comportant une bande de film (3) se déroulant d'une bobine de réserve (2), un épaulement de formage (4) destiné à transformer la bande de film (3) en un tube de film (5), un dispositif de tirage du film (6) destiné à faire défiler la bande de film (3) et le tube de film (5), un tube de remplissage (7) orienté verticalement pour recevoir et remplir le tube de film (5), un dispositif de soudure longitudinal (8) destiné à souder les bords (9) de la bande de film (3) et donc à réaliser une soudure longitudinale (10) du tube de film (5), un dispositif de soudure transversal (11) avec deux mâchoires de soudure (13) mobiles l'une vers l'autre, qui sont destinées à souder le tube de film (5) perpendiculairement à sa direction de transport (12) et qui réalisent des soudures supérieures (14) et des soudures inférieures (15) sur les poches tubulaires (16), et un dispositif de sectionnement (17) destiné à sectionner la poche tubulaire (16) dans le tube de film (5), **caractérisée en ce que** le tube de remplissage (7) est formé par deux goulottes (28, 29) orientées l'une vers l'autre avec leur volume intérieur, et **en ce qu'**une goulotte (29) est assemblée de manière amovible à l'autre goulotte (28).

2. Ensacheuse verticale selon la revendication 1, **caractérisée en ce que** la goulotte (29) amovible est prévue dans la zone des bords (9), en contact l'un avec l'autre, du tube de film (5).

3. Ensacheuse verticale selon la revendication 1 ou 2, **caractérisée en ce qu'**une goulotte (29) est assemblée à l'autre goulotte (28) au moyen d'une articulation pivotante (30), et **en ce qu'**un dispositif d'immobilisation (31) est prévu pour immobiliser la goulotte (29) pivotante dans une position en appui contre l'autre goulotte (28).

4. Ensacheuse verticale selon la revendication 1 ou 2, **caractérisée en ce que** les goulottes (28, 29) sont assemblées l'une à l'autre au moyen d'un assemblage à enfichage (32).

5. Ensacheuse verticale selon l'une quelconque des revendications 1 à 4, **caractérisée en ce que** l'épaulement de formage (4) comporte une arête de guidage (18) sur un bord supérieur (19) d'un manchon (20) de l'épaulement de formage, entourant le tube de remplissage (7), et une chemise (21) du conformateur, qui est destinée à être posée contre l'arête de guidage (18) courbe et qui est orientée vers l'extérieur en s'écartant de l'arête de guidage (18), **en ce que** la chemise (21) de l'épaulement de formage est formée par deux parties de chemise (22, 23) séparées, **en ce que** le manchon (20) de l'épaulement de formage est formé par deux parties de manchon (24, 25) séparées, **en ce que** chaque partie de chemise (22, 23) et une partie de manchon (24, 25), adjacente à cette dernière, forment une unité (26, 27), **en ce que** les deux unités (26, 27) définissent l'épaulement de formage (4), et **en ce qu'**une unité (27) est détachable de l'autre unité (26) pour pouvoir retirer le tube de remplissage (7) ou une goulotte (29) hors de l'épaulement (4) perpendiculairement au sens de transport (12).

6. Ensacheuse verticale selon la revendication 5, **caractérisée en ce qu'**il est prévu une unité postérieure (26), qui est positionnée vers la bande de film (3) entrant, et **en ce qu'**il est prévu une unité antérieure (27) dans la zone des bords (9), en contact l'un avec l'autre, du tube de film (5).

7. Ensacheuse verticale selon la revendication 5 ou 6, **caractérisée en ce qu'**une unité (27) est assemblée à l'autre unité (26) par l'intermédiaire d'une articulation pivotante (33) et d'un dispositif d'immobilisation (34).

8. Ensacheuse verticale selon l'une quelconque des revendications 1 à 7, **caractérisée en ce qu'**une vis de dosage (35) avec un tube hélicoïdal (36) entourant la vis de dosage (35) sont prévus dans le tube de remplissage (7).
